# EUROPÄISCHE PATENTSCHRIFT

(11) **EP 0 698 648 B1**
(45) Veröffentlichungstag und Bekanntmachung des Hinweises auf die Patenterteilung: **28.04.1999**
(21) Anmeldenummer: 95112967.5
(22) Anmeldetag: 17.08.1995
(51) Int. Cl.: C09J 167/02, C08G 63/672

(54) **Copolyesterschmelzklebemassen**
Copolyester adhesive compositions
Compositions adhésives à base de copolyester

(30) Priorität: 24.08.1994 DE 4430048
(43) Veröffentlichungstag der Anmeldung: 28.02.1996
(73) Patentinhaber: EMS-INVENTA AG, 8001 Zürich (CH)
(72) Erfinder: Poessnecker, Gerhard, Dr. rer. nat., CH-7014 Trin (CH)
(74) Vertreter: Becker, Eberhard

(56) Entgegenhaltungen:
- DE-A- 2 705 270
- DE-A- 3 132 059

## Beschreibung

Die Erfindung betrifft Copolyesterschmelzklebemassen. Die Erfindung befaßt sich speziell mit linearen, niedrigschmelzenden, teilkristallinen Copolyestern auf Basis der Hauptkomponenten Terephthalsäure, Isophthalsäure, Butandiol, Triethylenglykol und wahlweise Diethylenglykol, die Schmelzkleber für textile und technische Anwendungen sind.

Der Einsatz sehr unterschiedlicher Copolyester (CoPES) als Kleber ist bereits vielfach in der Literatur beschrieben.

Das Ziel der Erfindung war die Entwicklung niedrigschmelzender, schnell kristallisierender Copolyester, welche eine genügende Resistenz gegenüber Wasch- und Reinigungsprozeduren zeigen und deren Haftkraft hierdurch nur wenig sinkt.

Der Vorteil eines niedrigen Schmelzpunktes liegt vor allem in der Möglichkeit niedrige Applikations-Temperaturen verwenden zu können. Dies ist besonders vorteilhaft bei temperaturempfindlichen Materialien. Als Textilien sind hier vor allem Pelz und Leder zu nennen.

Ein weiterer Vorteil ergibt sich bei der Pastenpunktbeschichtung. Hier ist der Einsatz von Weichmachern in der Paste beinahe obligatorisch. Üblicherweise verwendet werden hierzu aromatische Sulfonamide oder oligomere Phthalsäureester. Der Grund liegt in der Verminderung des Schmelzpunktes und der Herabsetzung der Schmelzviskosität. Beide Phänomene führen zu einer Verminderung der Ansprechtemperatur des Schmelzklebers, d.h. der Kleber kann bei geringeren Temperaturen verarbeitet werden.

Durch den Einsatz niedrigschmelzender Polyester kann die Weichmachermenge reduziert, oder der Weichmacher sogar ganz aus der Pastenrezeptur herausgelassen werden. Dies hat zum einen zur Folge, daß die eingesetzte Paste billiger wird. Aber nicht nur aus ökonomischen, sondern auch aus ökologischen Gründen ist eine Paste mit verringertem Weichmacheranteil zu bevorzugen. Genannt werden sollen in diesem Zusammenhang die schlechte Abbaubarkeit oder teilweise bakterizide Wirkung der Sulfonamide im Abwasser, sowie die Emission der z.T. flüchtigen Substanzen am Arbeitsplatz.

Der Einsatz eines Copolyesters mit hoher Kristallisationsgeschwindigkeit bietet sich aus verschiedenen Gründen an. Die Bildung der kristallinen Bereiche ist Voraussetzung für die mechanische Festigkeit eines Polymeren oberhalb des Glaspunktes. Je schneller sich also die kristallinen Domänen ausbilden können, desto eher ist die Klebestelle mechanisch belastbar. Des weiteren ist die Oberflächenklebrigkeit eines polymeren Schmelzklebers direkt von dessen Kristallisation abhängig. Je geringer die Tendenz zur Kristallisation, desto länger bleiben z.B. beschichtete Einlagen klebrig. Das hat beispielsweise beim Aufrollen dieser beschichteten Substanzen Schwierigkeiten zu Folge, weil die einzelnen Lagen leicht miteinander verkleben können und somit das ganze Gebilde unbrauchbar wird. Bei einem schnell kristallisierenden Polymer kann jedoch dieser Nachteil überwunden werden, und es entfallen zeitraubende Temperungsprozeduren, was sich positiv auf die Produktionsgeschwindigkeit auswirkt.

Aus diesen Gründen sind niedrigschmelzende, schnellkristallisierende Copolyester von industrieller Bedeutung. Niedrigschmelzende Copolyester sind bereits in der einschlägigen Patentliteratur vorhanden. So beschreibt z.B. US-Patent 4,551,521 Substanzen mit einem Schmelzpunkt zwischen 60 bis 130 °C. Allerdings handelt es sich bei diesen Verbindungen um Substanzen mit gänzlich anderer chemischer Zusammensetzung: nämlich mindestens 70,5 Mol-% Adipinsäure und 70 bis 99, Mol-% 1,4 Cyclohexandimethanol.

CoPES mit Adipinsäure haben jedoch den Nachteil, daß durch Temperatur- und/oder Sauerstoffeinwirkung stark gefärbte Abbauprodukte entstehen, deren Bildung nur durch Zusätze geeigneter Stabilisatoren und Antioxidantien verhindert werden kann. Dieses Problem tritt bei CoPES mit 100 % aromatischem Säureanteil nicht auf.

Daher ist es Aufgabe der Erfindung für ein Terephthalsäure/lsophthalsäure-(TPS/IPS)Gemisch mit möglichst hohem TPS-Anteil unter Ausschluß von aliphatischen Dicarbonsäuren solche Diole als Comonomere zu Butandiol zu finden, welche a) den Schmelzpunkt deutlich herabsetzen und b) gleichzeitig die Kristallisation fördern.

Die Lösung dieser Aufgabe stellen die niedrigschmelzenden, schnellkristallisierenden und flexiblen Copolyesterschmelzklebemassen mit den kennzeichnenden Merkmalen des Anspruchs 1 und ihre Verwendung als Schmelzkleber gemäß Anspruch 5 dar.

Die Lösung liegt insbesondere in Schmelzklebemassen aus statistischem CoPES mit einer Kombination von Butandiol (BDO) und Triethylenglykol (TEDO) und wahlweise anderen aliphatischen Glykolen, vorzugsweise Diethylenglykol (DEDO) und mit Terephthalsäure und Isophthalsäure als Monomere. Inbesondere muß die Viskosität dieser Klebemassen für textile Anwendungen, die Waschlaugen und chemischer Reinigung ausgesetzt werden, über 80 Pas liegen, da mit sinkender Viskosität die Anfälligkeit gegenüber diesen Manipulationen wächst.

Die besondere Kombination der Eigenschaften der Copolyesterschmelzklebemassen, welche Gegenstand der Erfindung sind, läßt sich durch die Rohstoffzusammensetzung der Verbindungen erklären. In Terephthalsäure/lsophthal-säure Copolymeren steigt die Kristallisationstendenz durch Erhöhung des Terephthalsäure(TPS)-Anteils. Isophthalsäure (IPS) wirkt dagegen hinderlich auf die Kristallisation. Gleichzeitig steigt der Schmelzpunkt mit Erhöhung des TPS-Anteils. Dies tritt besonders bei den Copolyestern der beiden oben genannten aromatischen Dicarbonsäuren mit Diol (z.B. 1,4 Butandiol (BDO), 1,6 Hexandiol) zu Tage. Derartige Systeme haben ein relativ flaches Schmelzpunktminimum, welches bei sehr hohen Anteilen IPS liegt. Die Schmelzpunktkurven dieser Systeme steigen relativ steil von einem Anteil von 50 Mol-% TPS in Richtung des TPS-Homopolyesters an.

Um eine hohe Kristallisationsgeschwindigkeit zu gewährleisten ist es vorteilhaft, einen CoPES mit hohem TPS-Anteil zu verwenden. Bei gleichzeitiger Erfüllung der Forderung eines niedrigen Schmelzpunktes bedeutet dies aber, daß der Butandiolgehalt dementsprechend niedrig sein muß. Das heißt: Je höher also der TPS-Anteil in der erfindungsgemäßen Copolyesterschmelzklebemasse ist, desto niedriger muß der BDO-Anteil sein. Für die erfindungsgemäßen Schmelzklebemassen mit einem Schmelzpunkt unter 130 °C bedeutet dies, daß die Summe der molaren Anteile von TPS und BDO, bezogen auf die Gesamtsäure- bzw. Gesamtdiolmenge von je 100 Mol-% nicht über einem Wert von 140 Mol-% liegen darf.

Unerwarteterweise beeinflußt die Verwendung von Triethylenglykol die Eigenschaften des Copolyesters mit dem oben geforderten Eigenschaftsprofil nachhaltig positiv. CoPES mit konstantem Verhältnis an TPS zu IPS und konstantem BDO-Gehalt zeigen einen niedrigen Schmelzpunkt, wenn TEDO statt DEDO als restliche Diolkomponente verwendet wird. Die Verwendung von TEDO beschleunigt des weiteren auch die Kristallisation.

Setzt man als Restdiol-Gemische DEDO und TEDO ein, so kann der Schmelzpunkt als Funktion des DEDO : TEDO Verhältnisses ebenfalls über ein flaches Minimum laufen, das auf Seiten des TEDO liegt. Die Kristallisationsgeschwindigkeit nimmt in diesen Reihen mit steigendem TEDO-Gehalt zu.

Wegen der zusätzlichen Schmelzpunktabsenkung stellen daher auch Gemische aus DEDO und TEDO eine alternative Lösung der erfindungsgemäßen Aufgaben dar und können in einer CoPES-Rezeptur neben TPS/IPS/BDO eingesetzt werden.

Aus besagten Gründen ist jedoch ein Anteil von mindestens 10 Mol-% TEDO vorteilhaft. Er bewirkt gleichzeitig eine vorteilhafte Erhöhung der Haftwerte. Dies wird mit den Beispielen H und X3 belegt (siehe Tabelle 1). Diese Betrachtungen treffen auch dann zu, wenn das DEDO durch das isostere 1,5 Pentandiol ersetzt ist.

Mit steigendem Anteil an Triethylenglykol gewinnt das Produkt ferner zunehmend an Flexibilität. Setzt man bei der Synthese der Copolyester dem Ansatz einige Mol-% höhermolekulare Oligomere des Ethylenglykols, wie Tetraethylenglykol, Pentaethylenglykol usw., auf Kosten des Triethylenglykolanteils zu, so erhält man ebenfalls Produkte mit steigender Flexibilität. Negative Auswirkungen auf die Haftung treten nicht ein. Jedoch verschwindet bei zunehmender Länge der Ethylenglykololigomere bei konstantem Gewichtsanteil im Polymer die schmelzpunktsenkende Wirkung.

Gemessen an der Vielzahl der auf dem Gebiet der Kleber veröffentlichten Patentschriften, ist es erstaunlich, daß Triethylenglykol nur vereinzelt als Comonomeres für die Synthese von Copolyestern beschrieben wird, welche als Klebstoffe eingesetzt werden.

So beschreibt EP-A-0 204 528 Copolyester-Folien für Nahrungsmittelverpackungen aus einem Copolyester mit mindestens 85 Mol-% TPS, 65-97 Mol-% BDO und 3-35 Mol-% eines Polyethylenglykols mit einer Molmasse zwischen 106 und 550 g/mol, wobei TEDO unter diese Sammelbezeichnung fällt. Der mittels DSC zu bestimmende Schmelzpunkt muß bei diesen Produkten zur Filmbildung allerdings zwischen 160 und 200 °C liegen. Schmelzkleber mit so hohen Schmelzpunkten sind für den Einsatz im Textilbereich unbrauchbar.

EP-A-0 164 910 beschreibt ebenfalls eine Copolyester-Folie aus Copolyestern mit einem Schmelzpunkt im Bereich von 160 bis 200 °C.

Die beiden Patente JP 57/133217 und JP 57/095311 beschreiben die Herstellung von Fasern auf Copolyesterbasis mit bis zu 20 % TEDO neben Butandiol und Hexamethylendiol bzw. aliphatischen Dicarbonsäuren.

Das Patent CH-A-533 165 schützt ebenfalls Copolyester aus aromatischen Dicarbonsäuren und mehreren Glykolen, wobei der Schmelzpunkt der beschriebenen Produkten zwischen 160 °C und 220 °C liegt, der für den textilen Anwendungs-Bereich zu hoch ist.

Das Patent DE-A-32 39 413 beschreibt Formmassen auf Basis Polybutylenterephthalat mit 5 bis 25 Mol-% eines linearen Alkandiols mit 6 bis 20 C-Atomen.

Im Patent EP-A-120 618 werden thermoplastische Copolyester für Klebestifte, bestehend aus 44 bis 53 Mol-% TPS, 33 bis 48 Mol-% IPS und weiteren aliphatischen Dicarbonsäuren mit 4 bis 12 C-Atomen beschrieben, welche mindestens 90 Mol-% Butandiol als Diolkomponente enthalten.

Im Patent JP 58/134114 schließlich werden Copolyester als Hot-melts beschrieben, welche ausschließlich aus aromatischen Disäuren bestehen (TPS/IPS = 40 bis 70 / 60 bis 30 Mol-%) und zu 85 bis 98 Mol-% Butandiol neben anderen Glykolkomponenten enthalten.

All diese oben genannten Patente tangieren die vorliegende Erfindung nicht, die insbesondere thermoplastische Copolyesterschmelzklebemassen mit niedrigem Schmelzpunkt und sehr hoher Kristallisationsgeschwindigkeit betrifft, welche besonders als textile Schmelzkleber bei niedrigen Fixiertemperaturen eingesetzt werden können, und eine hervorragende Resistenz gegenüber chemischer Reinigung und Wäsche zeigen.

Dieses hohe Anforderungsprofil konnte nur mit den erfindungsgemäßen Copolyestern erfüllt werden. Wie in weiter unten stehender Tabelle 1 gezeigt ist, hätte man die ersten zwei Anforderungspunkte auch mit einem Copolyester auf Hexandiol-Basis erfüllen können (Beispiel X2), doch zeigte diese Rezeptur eine sehr schlechte Haftung und Beständigkeit.

Für die erfindungsgemäßen Copolyesterschmelzklebemassen liegt der molare Anteil an Tereph-thalsäure bei mindestens 55 Mol-%, bezogen auf die Gesamtsäuremenge, der molare Anteil an Butandiol ist kleiner als 85 Mol-%, sie enthalten mindestens 10 Mol-% Triethylenglykol und als Ergänzung auf 100 Mol-% Diethylenglykol und/oder 1,5-Pentandiol, wobei Diethylenglykol bevorzugt ist.

In bevorzugten Ausführungen ist die Zusammensetzung mindestens 65 Mol-% Terephthalsäure bei einem Butandiolanteil zwischen 20 und 60 Mol-%, wobei der Restdiol-Anteil aus Diethylenglykol, und/oder 1,5 Pentandiol sowie Triethylenglykol besteht, und das Verhältnis der beiden erstgenannten Diole zum letztgenannten nicht größer als 3 : 1, bevorzugt 1 : 1 bis 0 : 1, ist.

Der Schmelzpunkt der erfindungsgemäßen Copolyesterschmelzklebemassen liegt zwischen 60 und 130 °C, vorzugsweise zwischen 80 und 110 °C, und ihre Schmelzviskosität, gemessen nach ISO/DIN 1133 liegt, nicht unter 80 Pas.

Die erfindungsgemäßen Vorteile beruhen auf der besonderen, nirgends vorbeschriebenen Wirkung von Triethylenglykol. Es war überraschend, daß mit einem ausgewählten Triethylenglykolanteil in der Rezeptur einerseits derart niedrige Schmelztemperaturen und trotzdem sehr schnelle Kristallisation (und hohe Haftwerte) erreicht werden.

Die erfindungsgemäßen Copolyesterschmelzklebemassen werden bevorzugt für die Herstellung pulverförmiger Schmelzkleber mit unterschiedlichen Fraktionen in Pulverpunkt-, Pastenpunkt-, Streubeschichtung verwendet.

Besonders bevorzugt kommen die erfindungsgemäßen Copolyesterschmelzklebemassen auf Grund ihrer niedrigen Ansprechtemperatur im Pastenpunktverfahren zur Verwendung, wo sie als Paste mit reduzierter Weichmachermenge aufgetragen werden.

Die Weiterverarbeitung zu pulverförmigen Produkten kann nach bekannten Verfahren, z.B. dem Kaltmahlverfahren, geschehen.

An Hand der folgenden Beispiele sollen die erfindungsgemäßen Copolyester, mit anderen Produkten verglichen werden.

Die DSC-Messungen wurden mit einem Gerät der Firma DuPont Typ 1090 B durchgeführt. Als Schmelzpunkt wird das Maximum des Schmelzpeaks angegeben, wobei die Proben mit 20 K/min aufgeheizt wurden.

Die Schmelzviskositäten wurden nach dem Auslaufverfahren bei 160 °C nach DIN/ISO 1133 durchgeführt.

### Beschichtungs- und Haftungsparameter:

Zur Prüfung der Haftfestigkeit auf Textilien wurden Pulver mit einer Korngröße von 80 bis 200 µm auf einem handelsüblichen Einlagestoff mittels einer Pulverpunktbeschichtungsanlage mit einer 17-mesh Gravurwalze und einem Auflagegewicht von 17 ± 1 g/m² und dieser anschließend bei verschiedenen Temperaturen und einem Preßdruck von 0,4 bar mit einem handelsüblichen Oberstoff verpreßt.

Zur Messung der Haftkraft auf Textilien wurden 5 cm breite verklebte Textilstreifen in eine Zugmaschine eingespannt. Die Prüfparameter waren bei allen Messungen konstant:

| | |
|---|---|
| Prüfgeschwindigkeit | 100 mm/min |
| Prüfkörperbreite | 50 mm |
| Prüfstrecke | 80 mm |
| Vorkraft | 0 N |
| Prüftemperatur | 25 °C |

Tabelle 1 gibt die bei 100 °C und 120 °C gemessenen Haftkräfte für die Copolyester A bis H mit unterschiedlicher Zusammensetzung an.
X1, X2, X3 sind Vergleichsversuche.

Dabei bedeuten
- OH: Originalhaftung
- FW: Haftung nach Feinwäsche (40 °C)
- CR: Haftung nach Chemisch-Reinigung
- HD: 1,6-Hexandiol
TPS, IPS, BDO, DEDO und TEDO haben die oben im Text angegebene Bedeutung.

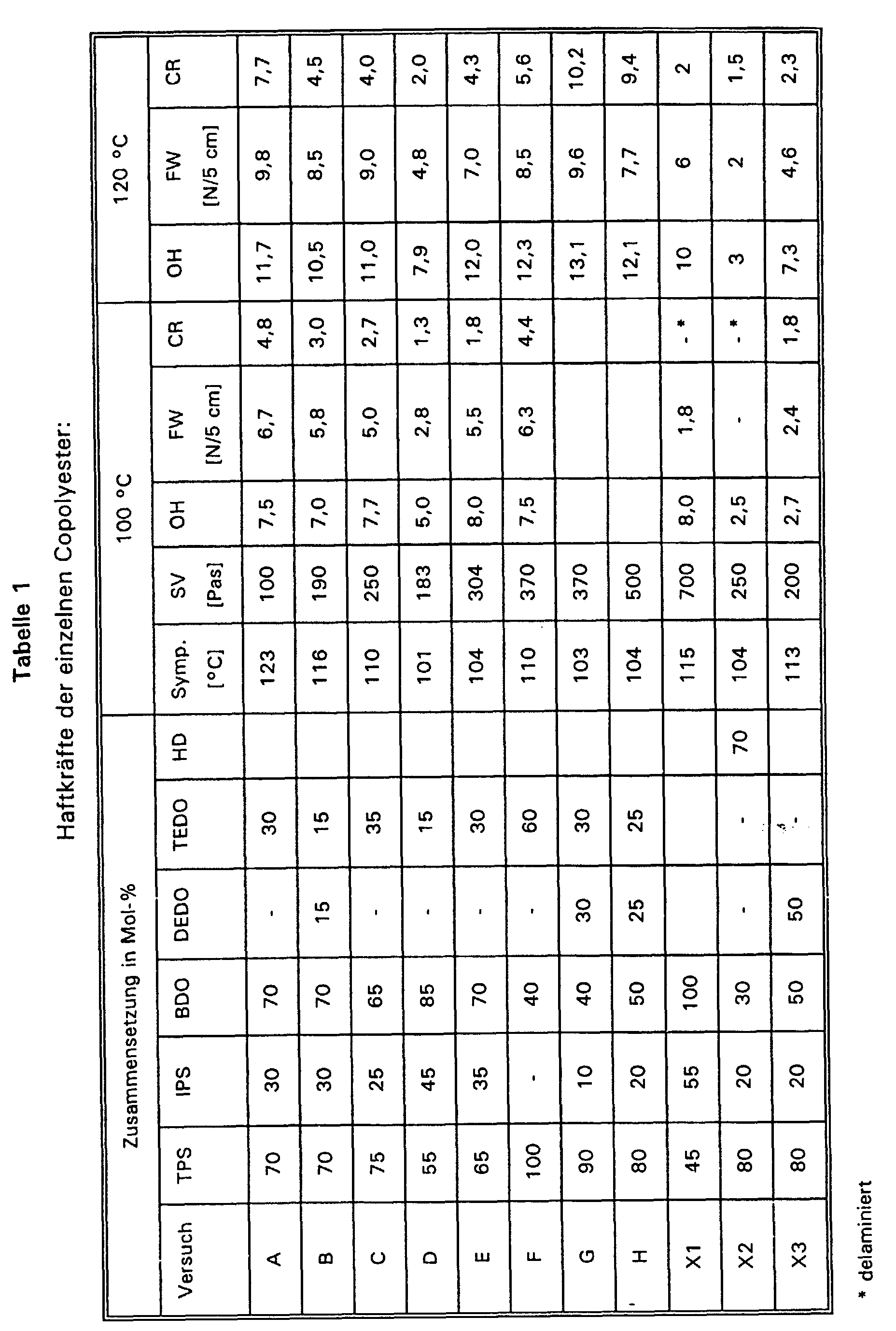

## Patentansprüche

1. Schmelzklebemassen aus einem statistischen Copolyester auf Basis von Terephthalsäure, Isophthalsäure und aliphatischen Diolen, dadurch gekennzeichnet, daß der molare Anteil an Terephthalsäure bei mindestens 55 Mol-%, bezogen auf die Gesamtsäuremenge liegt, der molare Anteil an Butandiol kleiner als 85 Mol-% ist und mindestens 10 Mol-% Triethylenglykol enthalten sind, wobei Diethylenglykol und/oder 1,5-Pentandiol die Diolmenge auf 100 Mol-% ergänzt bzw. ergänzen, die Summe der molaren Anteile von Terephthalsäure und Butandiol, bezogen auf die Gesamtsäure- bzw. Gesamtdiolmenge von je 100 Mol-%, maximal 140 Mol-% beträgt, und der Schmelzpunkt der Copolyester zwischen 60 und 130 °C liegt.

2. Copolyesterschmelzklebemassen gemäß Anspruch 1, dadurch gekennzeichnet, daß sie eine Zusammensetzung von mindestens 65 Mol-% Terephthalsäure, einem Butandiolanteil zwischen 20 und 85 Mol-% aufweist, wobei der Restdiol-Anteil aus Triethylenglykol und Diethylenglykol und/oder 1,5-Pentandiol besteht und das Verhältnis von Triethylenglykol zu den beiden weiteren Diolen zueinander zwischen 1 : 3 und 1 : 0 liegt.

3. Copolyesterschmelzklebemassen gemäß den Ansprüchen 1 und 2, dadurch gekennzeichnet, daß ihr Schmelzpunkt zwischen 80 und 110 °C liegt.

4. Copolyesterschmelzklebemassen gemäß einem der Ansprüche 1 bis 3, dadurch gekennzeichnet, daß sie eine Schmelzviskosität, gemessen nach ISO/DIN 1133, von nicht unter 80 Pas haben.

5. Verwendung der Copolyester Schmelzklebemassen gemäß den Ansprüchen 1 bis 4 zur Herstellung von pulverförmigen Schmelzklebern in unterschiedlichen Fraktionen für den Pulverpunkt-, Pastenpunkt- und Streubeschichtung.

6. Verwendung der Copolyester Schmelzklebemassen gemäß Anspruch 5, mit reduzierter Weichmachermenge zur Herstellung von Klebern in Pastenform.

## Claims

1. Melt adhesives consisting of a statistical copolyester on the basis of terephthalic acid, isophthalic acid and aliphatic diols, characterised in that
the molar proportion of terephthalic acid being at least 55 mole-%, based on the total amount of acid, the molar proportion of butanediol being less than 85 mole-% and triethylenglycol being present to at least 10 mole-%, wherein diethylenglycol and/or 1,5-pentandiol complement(s) the amount of diol to 100 %, wherein the sum of the molar proportions of terephthalic acid and butanediol amounts to no more than 140 mole-%, based on the total amount of acid and diol, respectively, of 100 mole-% each, and wherein the melting point of the copolyesters lies in the range of from 60 °C to 130 °C.

2. The copolyester melt adhesives according to claim 1, characterised in that
the composition thereof contains at least 65 mole-% of terephthalic acid and a butandiol proportion of between 20 and 85 mole-%, wherein the residual diol proportion consists of triethylene glycol and diethylene glycol and/or 1,5-pentandiol and wherein the ratio of triethylene glycol to both of the other diols is from between 1:3 to 1:0.

3. The copolyester melt adhesives according to claims 1 and 2, characterised in that the melting points thereof are in a range of from 80 to 110 °C.

4. The copolyester melt adhesives according to any one of the claims 1 to 3, characterised in that they exhibit a melt viscosity of at least 80 Pas, measured according to ISO/DIN 1133.

5. Use of the copolyester melt adhesives according to any one of the claims 1 to 4 for the preparation of powdered melt adhesives in different fractions for powder point-, paste point- and spread layers.

6. The use of the copolyester melt adhesives according to claim 5 with a reduced amount of softening agents for the preparation of adhesives in form of pastes.

## Revendications

1. Compositions de colle à fusion à partir d'un copolyester statistique à base d'acide téréphtalique, d'acide isophtalique et de diols aliphatiques, caractérisées en ce que la proportion molaire d'acide téréphtalique est d'au moins 55 moles%, exprimée par rapport à la quantité totale d'acide, la proportion molaire de butanediol est inférieure à 85 moles% et en ce qu'elles renferment au moins 10 moles% de triéthylèneglycol, le diéthylèneglycol et/ou le 1,5-pentanediol formant de complément de la quantité totale de diols à 100 moles%, la somme des proportions molaires de l'acide téréphtalique et du butanediol, exprimées par rapport à la quantité totale des acides ou de diols de 100 moles% respectivement, étant au plus 140 moles% et le point de fusion des copolyesters étant compris entre 60 et 130°C.

2. Compositions de colle à fusion à base de copolyester selon la revendication 1, caractérisées en ce qu'elles constituent une composition d'au moins 65 moles% d'acide téréphtalique, une proportion de butanediol comprise entre 20 et 85 moles%, la proportion du reste des diols étant constituée de triéthylèneglycol et de diéthylèneglycol et/ou de 1,5-pentanediol et le rapport entre le triéthylèneglycol et les deux autres diols étant compris entre 1/3 et 1/0.

3. Compositions de colle à fusion à base de copolyester, caractérisées en ce que son point de fusion est compris entre 80 et 110°C.

4. Compositions de colle à fusion à base de copolyester selon l'une des revendications 1 à 3, caractérisées en ce qu'elles présentent une viscosité à l'état fondu, mesurée selon ISO/DIN 1133, non inférieure à 80 Pas.

5. Utilisation des compositions de colle à fusion à base de copolyester selon les revendications 1 à 4 pour la préparation de colles à fusion sous forme de poudres en fractions différentes pour l'application en couche par point de poudre, point de pâte ou dispersion.

6. Utilisation des compositions de colle à fusion à base de copolyester selon la revendication 5, à quantité réduite de plastifiant pour la préparation de colle sous forme de pâte.
